(19) Europäisches Patentamt
European Patent Office
Office européen des brevets

(11) **EP 4 636 358 A1**

(12) **EUROPEAN PATENT APPLICATION**

(43) Date of publication:
**22.10.2025 Bulletin 2025/43**

(51) International Patent Classification (IPC):
*G01C 21/34* (2006.01)

(21) Application number: **25153225.5**

(52) Cooperative Patent Classification (CPC):
**G01C 21/3469**

(22) Date of filing: **22.01.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.04.2024 TW 113114689**

(71) Applicant: APh ePower Co., Ltd.
**Kaohsiung City 821 (TW)**

(72) Inventors:
• **CHAN, Chun-Ting**
 **Kaohsiung City 821 (TW)**
• **HUANG, Yi-Yun**
 **Kaohsiung City 821 (TW)**
• **SU, Hsiu-Hsien**
 **Kaohsiung City 821 (TW)**

(74) Representative: **Becker, Eberhard**
 **Becker Kurig & Partner**
 **Patentanwälte mbB**
 **Bavariastraße 7**
 **80336 München (DE)**

(54) **CARBON EMISSION MANAGEMENT SYSTEM AND MANAGEMENT METHOD THEREOF**

(57) A carbon emission management system (100) and a management method thereof are provided. A route optimization calculation module (102) calculates an optimized route (R1~R6) for a target vehicle (TA1~TA3) to drive to a destination according to an identification result and location information of the target vehicle (TA1-TA3), and provides route guidance information according to the optimized route (R1~R6) to guide the target vehicle (TA1~TA3) to the destination. A carbon emission calculation module (104) calculates a carbon emission of the target vehicle (TA1~TA3) according to the identification result and driving status information, and provide carbon emission reduction information according to the carbon emission of the target vehicle (TA1~TA3) and a preset carbon emission.

FIG. 1

EP 4 636 358 A1

**Description**

**BACKGROUND**

Technical Field

The disclosure relates to an electronic device, and particularly relates to a carbon emission management system and a management method thereof.

Description of Related Art

Nowadays, as parking lot usage increases, drivers need to spend a certain amount of time searching for parking spaces. As the time spent driving at low speeds increases, vehicles also emit more greenhouse gases. However, traditional parking lots face problems such as non-optimized parking routes and difficulties in monitoring vehicle emissions. Thus, how to effectively reduce carbon emissions from vehicles in parking lots remains an issue to be solved.

**SUMMARY**

The disclosure provides a carbon emission management system and a management method thereof, which may effectively reduce carbon emissions from vehicles.

The carbon emission management system of the disclosure includes a sensing unit, an identification module, a monitoring unit, a route optimization calculation module, and a carbon emission calculation module. The sensing unit senses a target vehicle and generates a sensing signal. The identification module is coupled to the sensing unit and identifies the target vehicle according to the sensing signal and generates an identification result. The monitoring unit monitors a location and a driving status of the target vehicle and generates location information and driving status information of the target vehicle. The route optimization calculation module decides a destination according to the identification result and the location information, calculates an optimized route for the target vehicle to drive to the destination, and provides route guidance information according to the optimized route, where the route guidance information is used to guide the target vehicle to the destination. The carbon emission calculation module is coupled to the identification module and the monitoring unit, calculates a carbon emission of the target vehicle according to the identification result and the driving status information, and provides carbon emission reduction information according to the carbon emission of the target vehicle and a preset carbon emission.

In an embodiment of the disclosure, the sensing signal includes an image signal of the target vehicle, the identification result includes at least one of a carbon emission coefficient and a vehicle type of the target vehicle, and the driving status information includes at least one of a driving route, a driving speed, and a driving time of the target vehicle.

In an embodiment of the disclosure, the destination is a target parking space, and the route optimization calculation module decides the target parking space according to a vehicle type of the target vehicle and the location information.

In an embodiment of the disclosure, a vehicle type of the target vehicle includes a fuel vehicle, a hybrid power vehicle or an electric vehicle, and the target parking space is a charging pile parking space, a battery swap station parking space or a general parking space.

In an embodiment of the disclosure, the route optimization calculation module calculates the optimized route according to an exit or an entrance of a parking lot.

In an embodiment of the disclosure, the route optimization calculation module calculates the optimized route according to at least one of a vehicle type of the target vehicle, a shortest driving distance, and a shortest driving time.

In an embodiment of the disclosure, the carbon emission management system includes a storage unit that stores map information of a parking lot, a vehicle type of the target vehicle, carbon emission coefficient, carbon emission information, and the driving status information.

The disclosure also provides a management method for a carbon emission management system, including the following steps. A target vehicle is sensed and a sensing signal is generated. The target vehicle is identified according to the sensing signal and an identification result is generated. A location and a driving status of the target vehicle are monitored and location information and driving status information of the target vehicle are generated. A destination is decided according to the identification result and the location information. An optimized route for the target vehicle to drive to the destination is calculated. Route guidance information is provided according to the optimized route, where the route guidance information is used to guide the target vehicle to the destination. A carbon emission of the target vehicle is calculated according to the identification result and the driving status information. Carbon emission reduction information is provided according to the carbon emission of the target vehicle and a preset carbon emission.

In an embodiment of the disclosure, the sensing signal includes an image signal of the target vehicle, the identification result includes at least one of a carbon emission coefficient and a vehicle type of the target vehicle, and the driving status information includes at least one of a driving route, a driving speed, and a driving time of the target vehicle.

In an embodiment of the disclosure, the destination is a target parking space, and the target parking space is decided according to a vehicle type of the target vehicle and the location information.

In an embodiment of the disclosure, a vehicle type of the target vehicle includes a fuel vehicle, a hybrid power vehicle or an electric vehicle, and the target parking space is a charging pile parking space, a battery swap station parking space or a general parking space.

In an embodiment of the disclosure, the management method of the carbon emission management system includes calculating the optimized route according to an exit or an entrance of a parking lot.

In an embodiment of the disclosure, the management method of the carbon emission management system includes calculating the optimized route according to at least one of a vehicle type of the target vehicle, a shortest driving distance, and a shortest driving time.

Based on the above, the route optimization calculation module of the embodiment of the disclosure may calculate the optimized route for the target vehicle to drive to the destination according to the identification result and location information of the target vehicle, and provide route guidance information according to the optimized route to guide the target vehicle to the destination. The carbon emission calculation module may calculate the carbon emission of the target vehicle according to the identification result and driving status information, and provide carbon emission reduction information according to the carbon emission of the target vehicle and the preset carbon emission. In this way, calculating the optimized route for the target vehicle to drive to the destination according to the identification result and location information of the target vehicle, and providing route guidance information according to the optimized route, may guide the target vehicle to the destination in a way that minimizes carbon emissions. In addition, providing carbon emission reduction information may help the driver to manage carbon emissions, so as to achieve the goal of net-zero carbon emissions.

In order to make the above-mentioned features and advantages of the disclosure comprehensible, embodiments accompanied with drawings are described in detail below.

## BRIEF DESCRIPTION OF THE DRAWINGS

FIG. 1 is a schematic diagram illustrating the carbon emission management system according to the embodiment of the disclosure.

FIG. 2 to FIG. 4 are schematic diagrams illustrating the management of carbon emissions of target vehicles in a parking lot according to the embodiments of the disclosure.

FIG. 5 is a flowchart of the management method for the carbon emission management system according to the embodiment of the disclosure.

## DESCRIPTION OF THE EMBODIMENTS

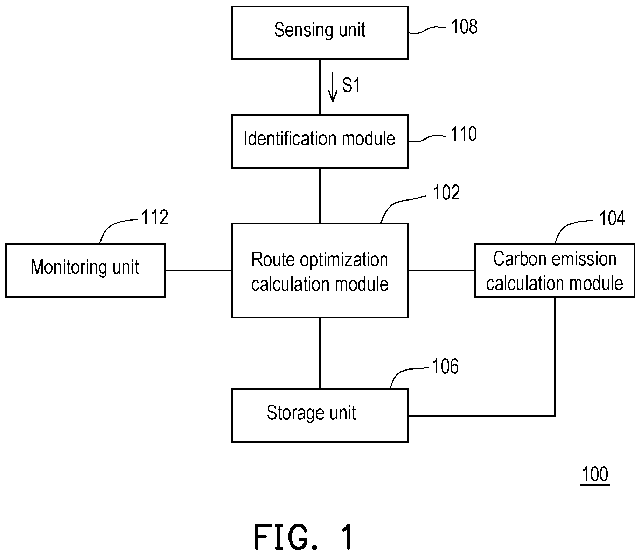

FIG. 1 is a schematic diagram illustrating the carbon emission management system according to the embodiment of the disclosure. Referring to FIG. 1, the carbon emission management system 100 may include a route optimization calculation module 102, a carbon emission calculation module 104, a storage unit 106, a sensing unit 108, an identification module 110, and a monitoring unit 112. The route optimization calculation module 102 is coupled to the carbon emission calculation module 104, the storage unit 106, the identification module 110, and the monitoring unit 112. The identification module 110 is also coupled to the sensing unit 108, and the storage unit 106 is also coupled to the carbon emission calculation module 104. The route optimization calculation module 102, the carbon emission calculation module 104, and the identification module 110 may be implemented, for example, by a processor or microcontroller, while the storage unit 106 may be implemented, for example, by non-volatile memory, but is not limited thereto. In addition, the sensing unit 108 and the monitoring unit 112 may be implemented, for example, by cameras, but are not limited thereto. For example, in some embodiments, the sensing unit 108 and the monitoring unit 112 may also be implemented by electronic tag (RFID tag) readers and speed meters.

The sensing unit 108 may sense the target vehicle and generate a sensing signal S1, where the sensing signal S1 may be, for example, an image signal of the target vehicle. The identification module 110 may identify the target vehicle according to the sensing signal S1 and generate an identification result, for example, by determining the vehicle type of the target vehicle through image recognition. Furthermore, in addition to the vehicle type of the target vehicle, the identification result may also include the carbon emission coefficient of the target vehicle, and the vehicle type may include, for example, fuel vehicles, hybrid power vehicles, electric vehicles, cars, or motorcycles. The reference images used by the identification module 110 for image recognition, along with the corresponding vehicle types and carbon emission coefficients, may be stored in the storage unit 106. In the case where the sensing unit 108 is implemented as an electronic tag reader, the sensing signal S1 may be, for example, a radio wave signal, and through the electronic tag reader, information such as the license plate information of the target vehicle and the corresponding vehicle type and carbon emission coefficient may be obtained.

The monitoring unit 112 may monitor the location and the driving status of the target vehicle, and generate location information and driving status information of the target vehicle, where the driving status information may include at least one of the driving route, driving speed, and driving time of the target vehicle. The location information and driving status information generated by the monitoring unit 112 may be stored in the storage unit 106 to continuously optimize the accuracy and efficiency of route planning. The route optimization calculation module 102 may decide a destination according to the identification result and location information, calculate an optimized route for the target vehicle to drive to the destination, and provide route guidance information, which is used to guide the target vehicle to the destination, according to the optimized route. The route optimization calculation module may calculate the optimized route according to at least one of the vehicle type of the target vehicle, the shortest driving distance, and the shortest driving time, so as to guide the target vehicle to the destination in a way that minimizes carbon emission.

In addition, the carbon emission calculation module 104 may calculate the carbon emission of the target vehicle according to the identification result and the driving status information, and provide carbon emission reduction information according to the carbon emission of the target vehicle and the preset carbon emission, allowing the driver to know the carbon emission status of the target vehicle, which helps the driver to manage carbon and achieve the goal of net-zero carbon emission. The carbon emission information calculated by the carbon emission calculation module 104 may also be stored in the storage unit 106 as reference information for the route optimization calculation module 102 when planning routes, which may help the route optimization calculation module 102 plan optimized routes in a way that minimizes carbon emission.

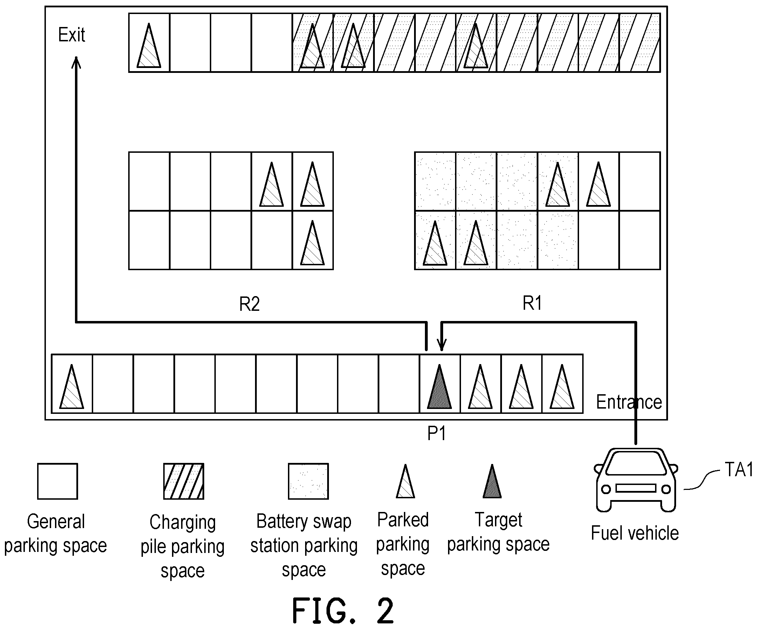

In some embodiments, the carbon emission management system may be applied to a parking lot management system. For instance, in the embodiment of FIG. 2, the target vehicle TA1 is a fuel vehicle, and when the target vehicle TA1 enters the parking lot through the entrance of the parking lot, the sensing unit 108 may sense the target vehicle TA1 and generate a sensing signal S1. The identification module 110 identifies the target vehicle TA1 according to the sensing signal S1 and determines that the vehicle type of the target vehicle TA1 is a fuel vehicle. The monitoring unit 112 monitors the location and driving status of the target vehicle TA1, and generates location information and driving status information of the target vehicle TA1. The route optimization calculation module 102 decides the target parking space P1 according to the vehicle type and location information of the target vehicle TA1. Furthermore, the parking lot may include various types of parking spaces, such as charging pile parking spaces, battery swap station parking spaces, and general parking spaces. Since the vehicle type of the target vehicle TA1 is a fuel vehicle, it is suitable for parking in a general parking space. Thus, the route optimization calculation module 102 decides the target parking space P1 according to the vehicle type of the target vehicle TA1. After the target parking space P1 is decided, the route optimization calculation module 102 may calculate an optimized route R1 for the target vehicle TA1 to drive from the entrance to the target parking space P1 according to the shortest driving distance or the shortest driving time, and provide route guidance information according to the optimized route R1 to guide the target vehicle T1 to the target parking space P1.

The way in which the route optimization calculation module 102 provides route guidance information may be, for example, to control the operation of equipment such as indicator lights, gates, display panels, etc., in the parking lot to guide the target vehicle TA1, or to transmit the route guidance information to the target vehicle TA1 or the driver's mobile phone through a wireless transmission module (not shown) in a wireless transmission way, but is not limited thereto. In addition, the route optimization calculation module 102 may also calculate an optimized route R2 from the target parking space P1 to the exit according to the shortest driving distance or the shortest driving time, and provide corresponding route guidance information. In some embodiments, the route optimization calculation module 102 may also calculate the optimized route according to the exit or entrance of the parking lot, for example, deciding the target parking space P1 to be the parking space closest to the entrance or exit, so that the location of the target parking space P1 better meets the driver's needs.

The carbon emission calculation module 104 may calculate the carbon emission of the target vehicle TA1 according to the carbon emission coefficient of the target vehicle TA1 and at least one of the driving route, driving speed, and driving time of the target vehicle TA1 actually driving from the entrance to the target parking space P1.

Furthermore, when the target vehicle TA1 is a fuel vehicle, the way the carbon emission calculation module 104 calculates the carbon emission C_gasoline may be as shown in the following equation (1).

$$C\_gasoline = D\_gasoline \times EF\_gasoline \quad (1)$$

Here, D_gasoline is the working kilometer (km), EF_gasoline is the fuel carbon emission coefficient (kg $CO_2$e/km)

When the target vehicle TA2 is a hybrid power vehicle, the way the carbon emission calculation module 104 calculates the carbon emission C_hybrid may be as shown in the following equation (2).

$$C\_hybrid = D\_hybrid \times EF\_hybrid \quad (2)$$

Here, D_hybrid is the working kilometer (km), EF_hybrid is the average carbon emission coefficient for fuel and electricity. Different fuel-to-electricity ratios in various vehicles may result in different carbon emissions, and driving using fuel usually generates more carbon emissions, while driving using electricity typically emits less carbon dioxide. For example, when 70% of the driving process uses electricity and 30% uses fuel, the average carbon emission coefficient for fuel and electricity may be calculated as (70% × electricity carbon emission coefficient) + (30% × fuel carbon emission coefficient), where the ratio of electricity to fuel use is not limited to this embodiment, and may also be, for instance, 60% electricity use and 40% fuel use.

Moreover, the carbon emission C_charge generated when the target vehicle TA2 charges using a charging pile may be as shown in the following equation (3).

$$C\_charge = Q\_charge \times EF\_charge \quad (3)$$

Here, Q_charge is the amount of electricity (kWh) charged from the charging pile during parking, and EF_charge is the carbon emission coefficient (kg $CO_2$e/kWh) for the electricity of the charging pile.

When the target vehicle TA3 is an electric vehicle, the way the carbon emission calculation module 104 calculates the carbon emission C_bev may be as shown in the following equation (4).

$$C\_bev = D\_electricity \times EF\_electricity \quad (4)$$

Here, D_electricity is the working kilometer (km), and EF_electricity is the carbon emission coefficient (kg $CO_2$e/kWh) for electricity.

After calculating the carbon emission of the target vehicle TA1, the carbon emission calculation module 104 may provide carbon emission reduction information according to the difference between the carbon emission of the target vehicle TA1 and the preset carbon emission. For example, the carbon emission reduction information may be transmitted wirelessly to the target vehicle TA1 or the driver's mobile phone to facilitate carbon management for the driver, where the preset carbon emission may be, for example, the average carbon emission of vehicles in the parking lot stored in the storage unit 106, but is not limited thereto. In some embodiments, the carbon emission calculation module 104 may also provide reward points to the driver, for example, by sending a reward notification through the wireless transmission module to inform the driver of cash back or fee reduction offers, but is not limited thereto. The reward points provided to the driver may be calculated according to the amount of reduced carbon emission, and when the reduced carbon emission is greater (i.e., when the difference between the carbon emission of the target vehicle TA1 and the preset carbon emission is larger), more reward points may be given. When the carbon emission of the target vehicle TA1 is not lower than the preset carbon emission, the carbon emission of the target vehicle TA1 may only be stored in the storage unit 106 without providing a reward point. Similarly, when the target vehicle TA1 drives from the target parking space P1 to the exit, the carbon emission calculation module 104 may also calculate the carbon emission and the reduced carbon emission correspondingly, and provide corresponding reward point, and details are not repeated herein.

Moreover, in the case where the target vehicle TA1 is shared by multiple passengers, the carbon emission calculation module 104 may also calculate the carbon emission per person according to the number of passengers in the target vehicle TA1, and provide average carbon emission information for each person to facilitate individual carbon emission management and recording. For example, when the target vehicle TA1 is shared by 3 people, the carbon emission of the target vehicle TA1 calculated by the carbon emission calculation module 104 may be divided by 3, and the average carbon emission may be provided to each passenger's mobile phone for display. This promotes passengers' awareness of their personal carbon emissions, thereby encouraging carpooling behavior for energy conservation and carbon reduction.

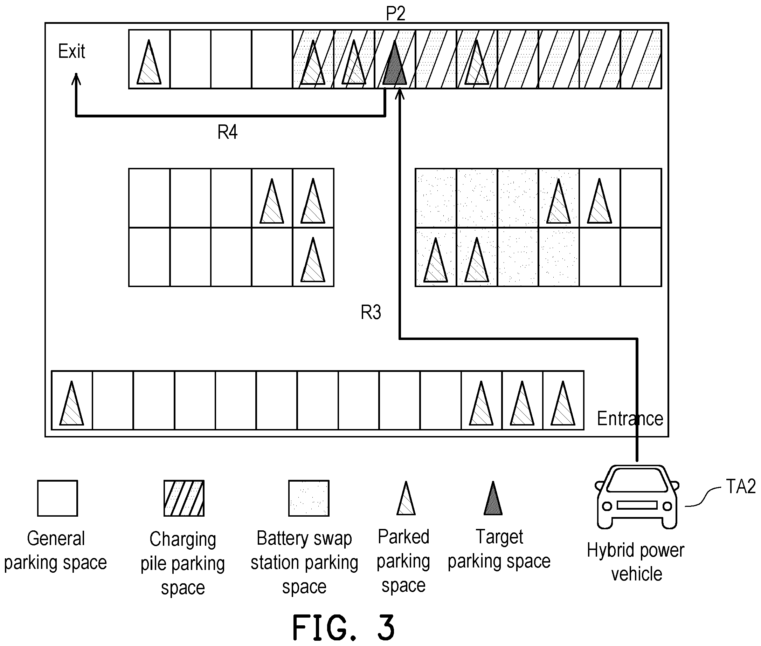

FIG. 3 is a schematic diagram illustrating the management of carbon emission of the target vehicle in a parking lot according to another embodiment of the disclosure. The difference between this embodiment and the embodiment in FIG. 2 is that the target vehicle TA2 in this embodiment is a hybrid vehicle. Thus, in this embodiment, the route optimization calculation module 102 decides the target parking space as the parking space P2 according to the vehicle type and location information of the target vehicle TA2. Similarly, the route optimization calculation module 102 may calculate an optimized route R3 and an optimized route R4 according to the shortest driving distance or the shortest driving time, and provide route guidance information according to the optimized route R3 and the optimized route R4. The carbon emission calculation module 104 may calculate the carbon emission of the target vehicle TA2 according to at least one of the carbon emission coefficient of the target vehicle TA2 and the actual driving route, driving speed, and driving time of the target vehicle TA2 from the entrance to the target parking space P2, and the carbon emission calculation module 104 may also provide carbon emission reduction information according to the difference between the carbon emission of the target vehicle TA2 and the preset carbon emission.

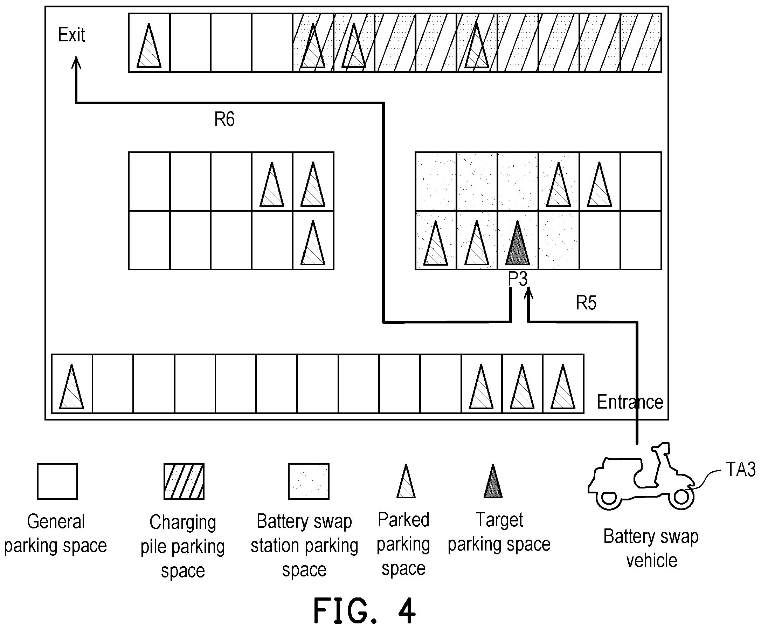

Similarly, FIG. 4 is a schematic diagram illustrating the management of carbon emission of the target vehicle in a parking lot according to another embodiment of the disclosure, and the difference between the embodiment in FIG. 4 and the embodiment in FIG. 2 is that the target vehicle TA3 in the embodiment of FIG. 4 is a battery swap vehicle. Thus, in the embodiment of FIG. 4, the route optimization calculation module 102 decides the target parking space as the parking space P3, which may provide battery replacement, according to the vehicle type and location information of the target vehicle TA3. Similarly, the route optimization calculation module 102 may calculate an optimized route R5 and an optimized route R6 according to the shortest driving distance or the shortest driving time, and provide route guidance information according to the optimized route R5 and the optimized route R6. The carbon emission calculation module 104 may calculate the carbon emission of the target vehicle TA3 according to at least one of the carbon emission coefficient of the target vehicle TA3 and the actual driving route, driving speed, and driving time of the target vehicle TA3 from the entrance to the target parking space P3, and the carbon emission calculation module 104 may also provide carbon emission reduction information according to the difference between the carbon emission of the target vehicle TA3 and the preset carbon emission. Since the detailed implementation methods of the route optimization calculation module 102 and the carbon emission calculation module 104 have been described in the above embodiments, the implementation methods of the route optimization calculation module 102 and the carbon emission calculation module 104 in the embodiments of FIG. 3 and FIG. 4 are not further elaborated here.

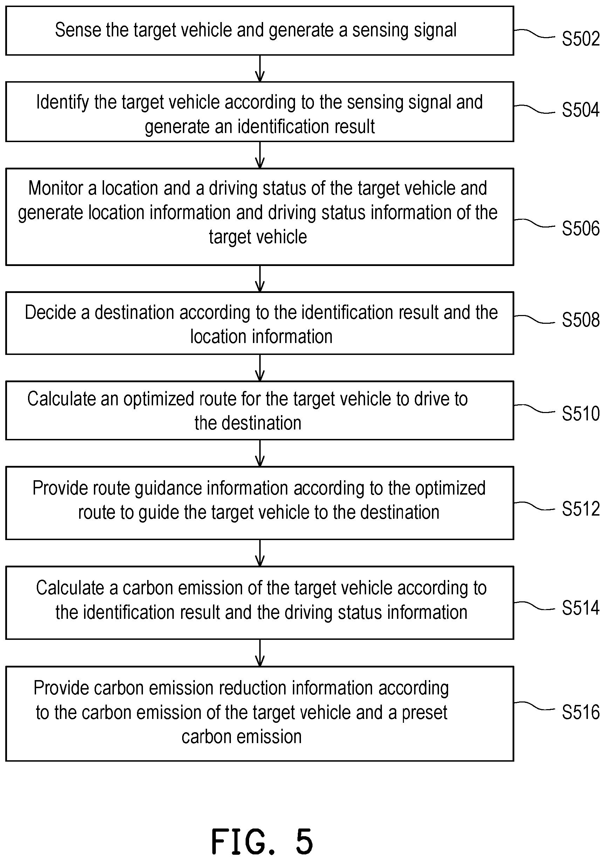

FIG. 5 is a flowchart of the management method for the carbon emission management system according to the embodiment of the disclosure. As may be seen from the above embodiments, the management method of the carbon emission management system may include the following steps. First, the target vehicle is sensed and a sensing signal is generated (step S502), where the sensing signal may be, for example, an image signal, but is not limited thereto. Next, the target vehicle is identified according to the sensing signal and an identification result is generated (step S504), where the identification result may include at least one of the carbon emission coefficient and the vehicle type of the target vehicle. Then, a location and a driving status of the target vehicle are monitored and location information and driving status information of the target vehicle are generated (step S506), where the driving status information may include at least one of a driving route, a driving speed, and a driving time of the target vehicle. Afterwards, a destination is decided according to the identification result and the location information (step S508). In the case where the carbon emission management system is applied to a parking lot management system, the destination may be the target parking space, which may be decided according to the vehicle type and location information of the target vehicle. The vehicle type of the target vehicle may include, for example, fuel vehicle, hybrid power vehicle, or electric vehicle, and the target parking space may be, for example, a charging pile parking space, a battery swap station parking space, or a general parking space.

Then, an optimized route for the target vehicle to drive to the destination is calculated (step S510), for example, calculating the optimized route according to at least one of a vehicle type of the target vehicle, a shortest driving distance, and a shortest driving time. In some embodiments, the optimized route may also be calculated according to the exit or entrance of the parking lot. Next, route guidance information is provided according to the optimized route, where the route guidance information is used to guide the target vehicle to the destination (step S512). Then, a carbon emission of the target vehicle is calculated according to the identification result and the driving status information (step S514), and carbon emission reduction information is subsequently provided according to the carbon emission of the target vehicle and a preset carbon emission (step S516).

In summary, the route optimization calculation module of the disclosure may calculate the optimized route for the target vehicle to drive to the destination according to the identification result and location information of the target vehicle, and provide route guidance information according to the optimized route to guide the target vehicle to the destination. The carbon emission calculation module may calculate the carbon emission of the target vehicle according to the identification result and driving status information, and provide carbon emission reduction information according to the carbon emission of the target vehicle and the preset carbon emission. In this way, calculating the optimized route for the target vehicle to drive to the destination according to the identification result and location information of the target vehicle, and providing route guidance information according to the optimized route, may guide the target vehicle to the destination in a way that minimizes carbon emissions. In addition, providing carbon emission reduction information may help the driver to manage carbon emissions, so as to achieve the goal of net-zero carbon emissions.

**Claims**

1. A carbon emission management system (100), comprising:

a sensing unit (108), sensing a target vehicle (TA1~TA3) and generating a sensing signal (S1);

an identification module (110), coupled to the sensing unit (108), identifying the target vehicle (TA1~TA3) according to the sensing signal (S1) and generating an identification result;

a monitoring unit (112), monitoring a location and a driving status of the target vehicle (TA1~TA3) and generating location information and driving status information of the target vehicle (TA1-TA3);

a route optimization calculation module (102), deciding a destination according to the identification result and the location information, calculating an optimized route (R1~R6) for the target vehicle (TA1~TA3) to drive to the destination, and providing route guidance information according to the optimized route (R1~R6), the route guidance information being used to guide the target vehicle (TA1~TA3) to the destination; and

a carbon emission calculation module (104), coupled to the identification module (110) and the monitoring unit (112), calculating a carbon emission of the target vehicle (TA1~TA3) according to the identification result and the driving status information, and providing carbon emission reduction information according to the carbon emission and a preset carbon emission.

2. The carbon emission management system (100) according to claim 1, wherein the sensing signal (S1) comprises an image signal of the target vehicle (TA1~TA3), the identification result comprises at least one of a carbon emission coefficient and a vehicle type of the target vehicle (TA1~TA3), and the driving status information comprises at least one of a driving route, a driving speed, and a driving time of the target vehicle (TA1~TA3).

3. The carbon emission management system (100) according to claim 2, wherein the destination is a target parking space (P1~P3), and the route optimization calculation module (102) decides the target parking space (P1~P3) according to a vehicle type of the target vehicle (TA1~TA3) and the location information.

4. The carbon emission management system (100) according to claim 3, wherein a vehicle type of the target vehicle (TA1~TA3) comprises a fuel vehicle, a hybrid power vehicle or an electric vehicle, and the target parking space (P1~P3) is a charging pile parking space, a battery swap station parking space or a general parking space.

5. The carbon emission management system (100) according to claim 3, wherein the route optimization calculation module (102) calculates the optimized route (R1~R6) according to an exit or an entrance of a parking lot.

6. The carbon emission management system (100) according to claim 1, wherein the route optimization calculation module (102) calculates the optimized route (R1~R6) according to at least one of a vehicle type of the target vehicle (TA1~TA3), a shortest driving distance, and a shortest driving time.

7. The carbon emission management system (100) according to claim 3, further comprising:
a storage unit (106), storing map information of a parking lot, a vehicle type of the target vehicle (TA1~TA3), carbon emission coefficient, carbon emission information, and the driving status information.

8. A management method of a carbon emission management system (100), comprising:

sensing a target vehicle (TA1~TA3) and generating a sensing signal (S1);
identifying the target vehicle (TA1~TA3) according to the sensing signal (S1) and generating an identification result;
monitoring a location and a driving status of the target vehicle (TA1~TA3) and generating location information and driving status information of the target vehicle (TA1-TA3);
deciding a destination according to the identification result and the location information;
calculating an optimized route (R1~R6) for the target vehicle (TA1~TA3) to drive to the destination;
providing route guidance information according to the optimized route (R1~R6), the route guidance information being used to guide the target vehicle (TA1~TA3) to the destination;
calculating a carbon emission of the target vehicle (TA1~TA3) according to the identification result and the driving status information; and
providing carbon emission reduction information according to the carbon emission and a preset carbon emission.

9. The management method of the carbon emission management system (100) according to claim 8, wherein the sensing signal (S1) comprises an image signal of the target vehicle (TA1~TA3), the identification result comprises at least one of a carbon emission coefficient and a vehicle type of the target vehicle (TA1~TA3), and the driving status information comprises at least one of a driving route, a driving speed, and a driving time of the target vehicle (TA1~TA3).

10. The management method of the carbon emission management system (100) according to claim 9, wherein the destination is a target parking space (P1~P3), and the target parking space (P1~P3) is decided according to a vehicle type of the target vehicle (TA1~TA3) and the location information.

11. The management method of the carbon emission management system (100) according to claim 10, wherein a vehicle type of the target vehicle (TA1~TA3) comprises a fuel vehicle, a hybrid power vehicle or an electric vehicle, and the target parking space (P1~P3) is a charging pile parking space, a battery swap station parking space or a general parking space.

12. The management method of the carbon emission management system (100) according to claim 10, further comprising:
   calculating the optimized route (R1~R6) according to an exit or an entrance of a parking lot.

13. The management method of the carbon emission management system (100) according to claim 8, further comprising:
   calculating the optimized route (R1~R6) according to at least one of a vehicle type of the target vehicle (TA1~TA3), a shortest driving distance, and a shortest driving time.

FIG. 1

FIG. 2

FIG. 3

**FIG. 4**

Sense the target vehicle and generate a sensing signal — S502

Identify the target vehicle according to the sensing signal and generate an identification result — S504

Monitor a location and a driving status of the target vehicle and generate location information and driving status information of the target vehicle — S506

Decide a destination according to the identification result and the location information — S508

Calculate an optimized route for the target vehicle to drive to the destination — S510

Provide route guidance information according to the optimized route to guide the target vehicle to the destination — S512

Calculate a carbon emission of the target vehicle according to the identification result and the driving status information — S514

Provide carbon emission reduction information according to the carbon emission of the target vehicle and a preset carbon emission — S516

FIG. 5

**Europäisches Patentamt**
**European Patent Office**
**Office européen des brevets**

## EUROPEAN SEARCH REPORT

**Application Number**

EP 25 15 3225

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 116 311 955 A (NANTONG MUNICIPAL ENGINEERING DESIGN INST CO LTD) 23 June 2023 (2023-06-23) * paragraph [0015]; claims 1-3 * * paragraph [0044] * | 1-13 | INV. G01C21/34 |
| Y | CN 114 999 202 A (CHINA COMMUNICATIONS TECH CO LTD; UNIV SOUTHEAST) 2 September 2022 (2022-09-02) * claims 1,4 * | 1-13 | |
| Y | CN 115 817 492 A (CHONGQING CHANGAN AUTOMOBILE CO LTD) 21 March 2023 (2023-03-21) * claim 1 * | 1-13 | |
| Y | EP 1 361 555 B1 (SIEMENS AG [DE]) 16 May 2007 (2007-05-16) * claim 1 * | 1-13 | |
| A | CN 110 706 503 A (SHANGHAI YUCE INTELLIGENT TECH CO LTD) 17 January 2020 (2020-01-17) * abstract * | 1-13 | **TECHNICAL FIELDS SEARCHED (IPC)** G01C |
| A | CN 113 178 095 A (UNIV CHONGQING JIAOTONG) 27 July 2021 (2021-07-27) * claims 1-4 * | 1-13 | |
| A | KR 102 059 849 B1 (UNIV INHA RES & BUSINESS FOUND [KR]) 27 December 2019 (2019-12-27) * claims 1-6 * | 1-13 | |
| A | CN 113 496 615 A (ZHAO QI) 12 October 2021 (2021-10-12) * claim 1 * | 1-13 | |

The present search report has been drawn up for all claims

| Place of search | Date of completion of the search | Examiner |
|---|---|---|
| Munich | 1 July 2025 | Lavin Liermo, Jesus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 636 358 A1

### ANNEX TO THE EUROPEAN SEARCH REPORT
### ON EUROPEAN PATENT APPLICATION NO.

EP 25 15 3225

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2025

| Patent document cited in search report | | Publication date | Patent family member(s) | | Publication date |
|---|---|---|---|---|---|
| CN 116311955 | A | 23-06-2023 | NONE | | |
| CN 114999202 | A | 02-09-2022 | NONE | | |
| CN 115817492 | A | 21-03-2023 | NONE | | |
| EP 1361555 | B1 | 16-05-2007 | AT | E362631 T1 | 15-06-2007 |
| | | | DE | 10220934 A1 | 29-01-2004 |
| | | | DK | 1361555 T3 | 24-09-2007 |
| | | | EP | 1361555 A2 | 12-11-2003 |
| | | | ES | 2285004 T3 | 16-11-2007 |
| CN 110706503 | A | 17-01-2020 | NONE | | |
| CN 113178095 | A | 27-07-2021 | NONE | | |
| KR 102059849 | B1 | 27-12-2019 | NONE | | |
| CN 113496615 | A | 12-10-2021 | NONE | | |

EPO FORM P0459

For more details about this annex : see Official Journal of the European Patent Office, No. 12/82